# EUROPÄISCHE PATENTSCHRIFT

(11) **EP 0 827 435 B1**
(45) Veröffentlichungstag und Bekanntmachung des Hinweises auf die Patenterteilung: **30.09.1998**
(21) Anmeldenummer: 96916093.6
(22) Anmeldetag: 15.05.1996
(51) Int. Cl.: B23D 63/12, B24B 53/00, B24B 53/12

(54) **VORRICHTUNG ZUM BAHNGESTEUERTEN SCHÄRFEN VON SÄGEVERZAHNUNGEN**
DEVICE FOR THE CONTOURED SHARPENING OF SAW TEETH
DISPOSITIF POUR L'AIGUISAGE A COMMANDE DE CONTOURNAGE DE DENTURES DE SCIES

(30) Priorität: 22.05.1995 DE 19518709
(43) Veröffentlichungstag der Anmeldung: 11.03.1998
(73) Patentinhaber: VOLLMER WERKE MASCHINENFABRIK GMBH, D-88400 Biberach (DE)
(72) Erfinder: BECK, Ernst, D-88437 Maselheim (DE); HENSINGER, Bruno, D-88471 Laupheim (DE); LENARD, Peter, D-88400 Biberach (DE)
(74) Vertreter: Goetz, Rupert, Dipl.-Ing.
(86) Internationale Anmeldenummer: EP9602097
(87) Internationale Veröffentlichungsnummer: WO9637328

(56) Entgegenhaltungen:
- DE-A- 2 921 196
- DE-A- 3 537 059
- DE-U- 9 400 697

## Beschreibung

Die Erfindung betrifft eine Vorrichtung nach dem Oberbegriff des Anspruchs 1; siehe z.B. DE-A 3537059.

Bei solchen Vorrichtungen werden der Schleifschlitten einerseits und der Vorschubschlitten andererseits von einer CNC-Steuerung oder einer Nockensteuerung so gesteuert, daß die Schleifscheibe jeweils entlang einer Zahnbrust in eine Zahnlücke der Verzahnung eines Sägeblattes eintaucht, während der Vorschubschlitten stillsteht. Sobald die Schleifscheibe den Zahngrund erreicht hat, beginnt eine Vorschubbewegung des Sägeblattes, die dadurch bewirkt wird, daß ein am Vorschubschlitten gelagerter Mitnehmer in Gestalt eines Fingers oder einer Klinke an einer benachbarten Zahnbrust angreift. Während der Vorschubbewegung taucht die Schleifscheibe im allgemeinen noch tiefer in den Zahngrund ein und wird dann allmählich zurückgezogen, um den angrenzenden Zahnrücken und schließlich dessen obersten, zur Zahnspitze gehörigen Teil, die sogenannte Freifläche, zu schärfen. Für ein derartiges bahngesteuertes Schärfen von Sägeverzahnungen ist eine Schleifscheibe erforderlich, die an ihrem Rand ein dem Verzahnungsprofil in bestimmter Weise angepaßtes Profil aufweist.

Durch Verschleiß erhält der Schleifscheibenrand allmählich ein abweichendes Profil; es ist deshalb erforderlich, die Schleifscheibe von Zeit zu Zeit abzurichten. Bekannt sind hierfür punktförmig an der Schleifscheibe angreifende Abrichtdiamanten, die in einem eigenen, von der Schleifvorrichtung unabhängigen Koordinatensystem bahngesteuert bewegbar sind. Ebenfalls bekannt sind Diamant-Abrichtrollen, die komplementär zum vorgesehenen Randprofil der Schleifscheibe profitiert und ebenfalls in einer eigenen Vorrichtung in mindestens zwei Koordinaten verstellbar gehalten sind, so daß sie bei stillstehendem Schleifschlitten mit der sich nur noch drehenden Schleifscheibe in Eingriff bringbar sind.

Der Erfindung liegt die Aufgabe zugrunde, das Abrichten von Schleifscheiben an einer Vorrichtung zum bahngesteuerten Schärfen von Sägeverzahnungen zu vereinfachen und den Zeitbedarf für jeden Abrichtvorgang zu verkürzen.

Die Aufgabe ist erfindungsgemäß mit den Merkmalen des Anspruchs 1 gelöst. Vorteilhafte Weiterbildungen sind Gegenstand der Unteransprüche.

Die erfindungsgemäße Abrichtschablone, die vorzugsweise mindestens zum Teil aus polykristallinem Diamant besteht, beansprucht wenig Platz und läßt sich deshalb an der Vorrichtung zum bahngesteuerten Schärfen von Sägeverzahnungen in unmittelbarer Nachbarschaft des Sägeblattes raumsparend in einer Ruhestellung unterbringen, in der die Schablone das Schärfen von Sägeverzahnungen nicht behindert. In den Schärfintervallen braucht die Schablone deshalb nur einen kurzen Weg aus ihrer Ruhestellung in eine vorzugsweise feste, also nicht veränderbare, Arbeitsstellung zurückzulegen, um die Voraussetzung dafür zu schaffen, daß die Schleifscheibe anstatt in die Sägeverzahnung nun in die Schablone eintaucht, von der sie bei einem einzigen Arbeitshub des Schleifschlittens abgerichtet wird. Vom normalen Betrieb beim Schärfen von Sägeverzahnungen unterscheidet sich die Arbeitsweise beim Abrichten der Schablone nur dadurch, daß der Vorschubschlitten in den Abrichtintervallen außer Betrieb gesetzt, also entweder insgesamt stillgesetzt oder auf andere Weise unwirksam gemacht wird, und daß der Hub des Schleifschlittens für das Abrichten verlagert oder verkürzt wird.

Ein Ausführungsbeispiel der Erfindung wird im folgenden anhand schematischer Zeichnungen mit weiteren Einzelheiten erläutert. Es zeigen:

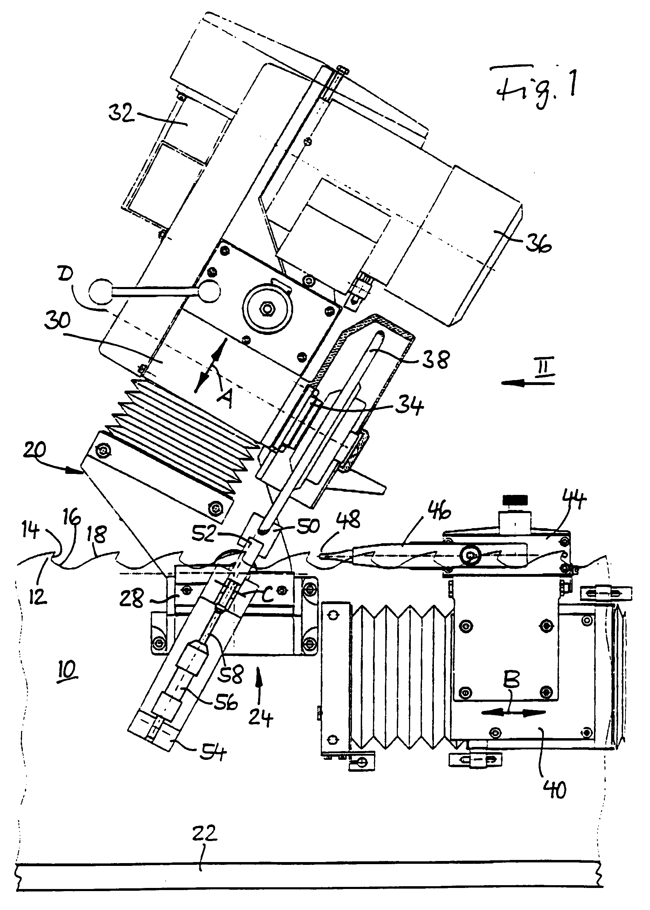

- Fig.1: die Vorderansicht einer erfindungsgemäßen Vorrichtung und

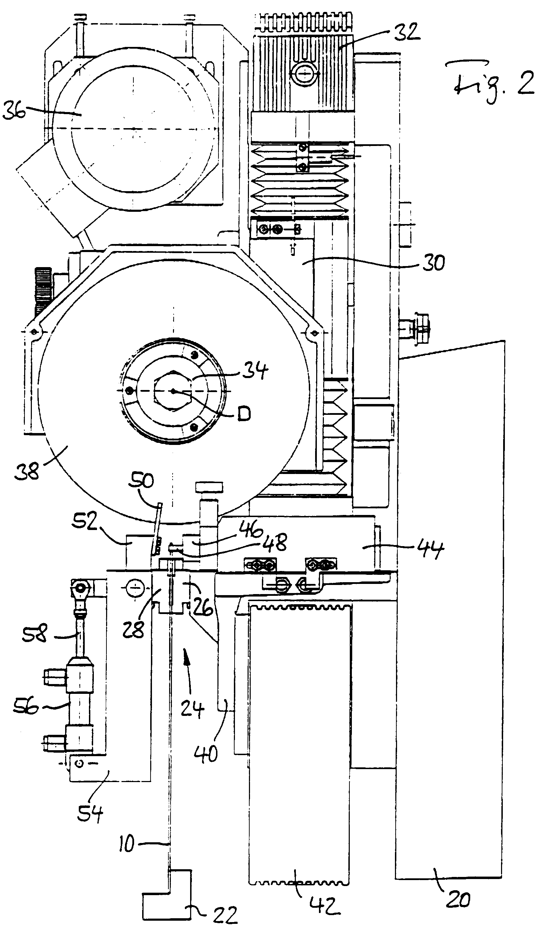

- Fig.2: die Seitenansicht in Richtung des Pfeils II in Fig.1.

In den Zeichnungen ist als Beispiel eines Sägeblattes 10, dessen Verzahnung zu schärfen ist, ein Bandsägeblatt dargestellt; unter Sägeblatt ist aber im vorliegenden Zusammenhang ebensogut ein Gattersägeblatt oder ein Kreissägeblatt zu verstehen. In jedem Fall handelt es sich um ein Sägeblatt 10 mit Zähnen 12, die an ihrer Zahnbrust 14 und zusätzlich an ihrem Zahngrund 16 und Zahnrücken 18 in einem bahngesteuerten Schärfvorgang bearbeitet werden.

Die Vorrichtung zum Schärfen des Sägeblattes 10 hat ein Maschinengestell 20 mit einer Sägeblattführung 22, die im dargestellten Beispiel von einer waagerechten Schiene gebildet und entsprechend der Breite des Sägeblattes 10 höheneinstellbar ist. Oberhalb der Sägeblattführung 22 ist eine Sägeblatthalterung 24 angeordnet, die im dargestellten Beispiel einen ortsfesten Backen 26 und einen verstellbaren Backen 28 aufweist. Der verstellbare Backen 28 ist in üblicher Weise in Richtung zum ortsfesten Backen 26 hin vorgespannt, so daß das Sägeblatt 10 zwischen den Backen schwingungsfrei gehalten ist, ohne an einer Vorschubbewegung gehindert zu sein.

Am Maschinengestell 20 ist ein Schleifschlitten 30 unter einem einstellbaren Winkel in Bezug zur Sägeblattführung 22 in Richtung des Doppelpfeils A mittels eines Hubantriebs 32 auf- und abbewegbar. Am Schleifschlitten 30 ist eine Schleifspindel 34 gelagert, die von einem Motor 36 drehantreibbar ist und eine Schleifscheibe 38 trägt.

Am Maschinengestell 20 ist ferner ein Vorschubsschlitten 40 parallel zur Sägeblattführung 22 im Sinne des Doppelpfeils B mittels eines Vorschubantriebs 42 hin- und herbewegbar. Der Vorschubschlitten 40 trägt einen normal zur Ebene des Sägeblattes 10 bewegbaren Querschlitten 44, an dem ein zur Ebene des Sägeblattes 10 paralleler Vorschubarm 46 angeordnet ist. Der Vorschubarm 46 weist an seinem vorderen Ende einen zur Ebene des Sägeblattes 10 normalen Vorschubfinger 48 auf und ist derart einstellbar, daß der Vorschubfinger bei jedem Arbeitshub an die Zahnbrust 14 eines Zahns 12 anlegbar ist, um das Sägeblatt 10 je nach Einstellung des Vorschubantriebs 42 um eine oder mehrere Zahnteilungen vorwärts zu schieben. Der Querschlitten 44 ist aus seiner abgebildeten Arbeitsstellung in eine Ruhestellung zurückziehbar, in welcher der Vorschubfinger 48 die Ebene des Sägeblatts 10 nicht erreicht; in dieser Ruhestellung ist also der Vorschubschlitten 40 im Sinne seiner normalen Funktion nicht betriebsfähig.

Zum Abrichten der Schleifscheibe 28 ist eine Schablone 50 vorgesehen, die entweder eine ganz aus polykristallinem Diamant (PKD) bestehende Platte oder eine Verbundplatte ist, bei der eine oder mehrere PKD-Platten auf eine Hartmetallplatte aufgelötet oder aufgeklebt sind, die ihrerseits durch eine Stahlplatte verstärkt sein kann. Die Abrichtschablone 50 ist auswechselbar an einer Schablonenhalterung 52 befestigt, die im dargestellten Beispiel von einem zweiarmigen Hebel gebildet und um eine zur Ebene des Sägeblattes 10 sowie zur Vorschubrichtung (Pfeil B) parallele Achse C schwenkbar an einer Konsole 54 gelagert ist. Die Abrichtschablone 50 ist in ihrer Arbeitsstellung abgebildet; dabei liegt sie in enger Nachbarschaft zur Ebene des Sägeblattes 10 in einer Ebene, welche die Drehachse D der Schleifscheibe 38 enthält. Aus dieser Arbeitsstellung, die durch einen nicht abgebildeten, einstellbaren Anschlag festgelegt ist, läßt sich die Schablonenhalterung 52 samt Abrichtschablone 50 mittels einer Kolbenzylindereinheit 56 um die Achse C, vom Sägeblatt 10 weg, in eine Ruhestellung schwenken, in der sie weder vom Sägeblatt 10 noch von der Schleifscheibe 38 berührt werden kann. Die Kolbenzylindereinheit 56 ist an der Konsole 54 gelagert, und ihre Kolbenstange 58 ist gelenkig mit der Schablonenhalterung 52 verbunden.

Zum Abrichten der Schleifscheibe 38 wird zweckmäßigerweise der Vorschubantrieb 42 abgeschaltet, zumindest aber der Querschlitten 44 in seine Ruhestellung verschoben, so daß der Vorschubfinger 48 nicht in die Verzahnung des Sägeblattes 10 eingreifen kann. Sodann wird die Abrichtschablone 50 in ihre Arbeitsstellung geschwenkt. All dies kann während eines normalen Rückhubes des Schleifschlittens 30 nach einem Schleifhub geschehen. Der nächste Abwärtshub des Schleifschlittens 30 wird entweder CNC-gesteuert oder durch Umstellen eines den Schleifschlitten normalerweise antreibenden Nockengetriebes so verändert, daß die Schleifscheibe 38 nicht in das Sägeblatt eintaucht sondern nur noch in die Abrichtschablone 50, deren Arbeitsstellung etwas höher liegt als die Verzahnung des Sägeblattes 10. Der untere Endpunkt dieses Abwärtshubes bestimmt den Betrag, um den die Schleifscheibe 38 abgerichtet wird. Beim nächsten Aufwärtshub wird der Hubantrieb 32 wieder auf normalen Betrieb umgesteuert, wobei aber der Betrag, um den sich der Radius der Schleifscheibe 38 durch das Abrichten verringert hat, durch Verschieben des unteren Endes der Bewegungsstrecke des Schleifschlittens 30 kompensiert wird. Gleichzeitig wird die Abrichtschablone 50 in ihre Ruhestellung zurückgeschwenkt. Schon der nächste Zyklus kann wieder ein normaler Schärfzyklus sein, bei dem miteinander koordinierte Bewegungen des Schleifschlittens 30 und des Vorschubschlittens 40 stattfinden und entsprechend miteinander koordinierte Bewegungen der Schleifscheibe 38 und des Sägeblattes 10 hervorrufen, so daß das Schärfen des Sägeblattes 10 fortgesetzt werden kann.

## Patentansprüche

1. Vorrichtung zum bahngesteuerten Schärfen von Sägeverzahnungen mit
- einer Sägeblatthalterung (24),
- einem Schleifschlitten (30), der eine profilierte Schleifscheibe (38) trägt und in bezug auf die Sägeblatthalterung (24) hubweise hin- und herbewegbar ist, und
- einem Vorschubschlitten (40), mit dem sich ein Sägeblatt (10) in der Sägeblatthalterung (24) schrittweise vorschieben läßt, dadurch gekennzeichnet, daß
- eine Abrichtschablone (50) an der Vorrichtung aus einer Ruhestellung intervallweise in eine Arbeitsstellung bewegbar ist, in der die Schleifscheibe (38) durch Eintauchen in die Abrichtschablone (50) abgerichtet wird,
- der Vorschubschlitten (40) in den Abrichtintervallen außer Betrieb setzbar ist und
- der Hub des Schleifschlittens (30) vor dem nächsten Eintauchen in das Sägeblatt (10) entsprechend der durch Abrichten bewirkten Radiusabnahme der Schleifscheibe (38) nachstellbar ist.

2. Vorrichtung nach Anspruch 1,
dadurch gekennzeichnet, daß die Abrichtschablone (50) in ihrer Arbeitsstellung neben der Sägeblatthalterung (24) angeordnet ist.

3. Vorrichtung nach Anspruch 1 oder 2,
dadurch gekennzeichnet, daß die Abrichtschablone (50) um eine zum Sägeblatt (10) parallele Schwenkachse (C) aus ihrer Ruhestellung in ihre Arbeitsstellung schwenkbar ist.

4. Vorrichtung nach Anspruch 3,
dadurch gekennzeichnet, daß die Abrichtschablone (50) an der Sägeblatthalterung (24) gelagert ist.

5. Vorrichtung nach einem der Ansprüche 1 bis 4,
dadurch gekennzeichnet, daß die Abrichtschablone (50) auswechselbar an einer Schablonenhalterung (52) befestigt ist.

6. Vorrichtung nach einem der Ansprüche 1 bis 5,
dadurch gekennzeichnet, daß die Abrichtschablone (50) eine mindestens teilweise aus polykristallinem Diamant bestehende Platte ist.

## Claims

1. An apparatus for the continuous path-controlled sharpening of saw toothings, comprising
- a saw blade holder (24),
- a grinding slide (30) which carries a profiled grinding wheel (38) and is movable to and fro in a strokewise manner with respect to the saw blade holder (24), and
- a feed slide (40) by means of which a saw blade (10) in the saw blade holder (24) can be advanced in a stepwise manner characterized in that
- a dressing template (50) at the apparatus is adapted to be moved in intervals from an inoperative position into an operative position in which the grinding wheel (38) is dressed by plunging into the dressing template (50),
- the feed slide (40) is adapted to be put out of operation during the dressing intervals, and
- the stroke of the grinding slide (30) is adjustable prior to the next plunging motion into the saw blade (10) corresponding to the radius decrease of the grinding wheel (38) effected by dressing.

2. The apparatus according to Claim 1,
characterized in that the dressing template (50) in its operative position is arranged adjacent to the saw blade holder (24).

3. The apparatus according to Claim 1 or 2,
characterized in that the dressing template (50) is adapted to be pivoted about a pivot axis (C) which extends parallel to the saw blade (10) from its inoperative position into its operative position.

4. The apparatus according to Claim 3,
characterized in that the dressing template (50) is supported at the saw blade holder (24).

5. The apparatus according to one of Claims 1 to 4,
characterized in that the dressing template (50) is replaceably attached at a template holder (52).

6. The apparatus according to one of Claims 1 to 5,
characterized in that the dressing template (50) is a plate which at least partially consists of polycrystalline diamond.

## Revendications

1. Dispositif pour l'aiguisage, à commande de contournage, de dentures de scies, comportant
- une fixation de lame de scie (24),
- un chariot porte-meule (30), portant un disque abrasif (38) profilé et déplaçable dans un sens et dans l'autre, sur la valeur d'une course, par rapport à la fixation de lame de scie (24), et
- un chariot d'avancement (40), à l'aide duquel une lame de scie (10) est avancée pas à pas dans la fixation de lame de scie (24), caractérisé en ce que
- un gabarit de dressage (50) est déplaçable sur le dispositif d'une position de repos, par intervalles, en une position de travail dans laquelle le disque abrasif (38) est dressé par plongée dans le gabarit de dressage (50),
- le chariot d'avancement (40) est susceptible d'être mis hors de fonctionnement lors des intervalles de dressage, et
- la course du chariot de disque (30) pouvant être soumise à un réglage de rattrapage, avant la plongée subséquente dans la lame de scie (10), de manière correspondante à la diminution de rayon, provoquée par le dressage, du disque abrasif (38).

2. Dispositif selon la revendication 1, caractérisé en ce que le gabarit de dressage (50) est disposé, à sa position de travail, à côté de la fixation de lame de scie (24).

3. Dispositif selon la revendication 1 ou 2, caractérisé en ce que le gabarit de dressage (50) est susceptible de pivoter autour d'un axe de pivotement (C) parallèle à la lame de scie (10), de sa position de repos à sa position de travail.

4. Dispositif selon la revendication 3, caractérisé en ce que le gabarit de dressage (50) est monté sur la fixation de lame de scie (24).

5. Dispositif selon l'une des revendications 1 à 4, caractérisé en ce que le gabarit de dressage (50) est fixé sur un support de gabarit (52), d'une façon permettant un remplacement.

6. Dispositif selon l'une des revendications 1 à 5, caractérisé en ce que le gabarit de dressage (50) est une plaque, constituée au moins partiellement en diamant polycristallin.
